# EUROPEAN PATENT APPLICATION

(11) **EP 1 743 695 A1**
(43) Date of publication of application: **17.01.2007**
(21) Application number: 04729744.5
(22) Date of filing: 27.04.2004
(51) Int. Cl.: B01J 20/22, A23L 3/3436

(54) **OXYGEN ABSORBER COMPOSITION**

(71) Applicant: Takasago International Corporation, Tokyo-to 144-8721 (JP)
(72) Inventor: Hiramoto, Tadahiro, c/o Takasago Int. Corpo., Hiratsuka-shi, Kanagawa 254-0073 (JP); Kumamoto, Hiroyasu, c/o Takasago Int. Corp., Hiratsuka-shi, Kanagawa 254-0073 (JP); Shiroyama, Kenichiro, c/o Takasago Int. Corp., Hiratsuka-shi, Kanagawa 254-0073 (JP)
(74) Representative: Uchida, Kenji
(86) International application number: PCT/JP2004/006075
(87) International publication number: WO 2005/105297

(57) **Abstract**

The present invention provides a deoxidant composition gentle to human bodies and environments which is excellent in the deoxidation effect, does not generate heat during use, can be put to a metal detector, and gives no problems to a human body even when it is ingested accidentally. Specifically, the present invention relates to a deoxidant composition comprising a polyphenol derivative obtainable by subjecting a polyphenol to a reaction using an alkaline solvent under the coexistence of an oxygen molecule at a pH during reaction of 6.5 or more, and one member selected from water, a water-donating compound and a moisture absorbent.

## Description

### Technical Field

The present invention relates to a deoxidant composition. Specifically, it relates to a deoxidant composition comprising a polyphenol derivative obtainable by subjecting a polyphenol to a reaction using an alkaline solvent under the coexistent of an oxygen molecule at a pH during reaction of 6.5 or more, and one member selected from water, water-donating compound and a moisture absorbent. Specifically, it relates to a deoxidant composition comprising a polyphenol derivative obtainable by subjecting a specified polyphenol to a reaction using an alkaline solvent under the coexistent of an oxygen molecule at a pH during reaction of 6.5 or more, and one member selected from water, a water-donating compound and a moisture absorbent; and a deoxidant composition comprising a polyphenol derivative obtainable by subjecting a specified polyphenol and amino acid to a reaction using an alkaline solvent under the coexistent of an oxygen molecule at a pH during reaction of 6.5 or more, and one member selected from water, a water-donating compound and a moisture absorbent.

### Background Art

A deoxidant is excellent in preventing various degradation of quality caused by oxygen such as growth of molds in foods, propagation of pests, oxidation of oils and fats, discoloration, etc. by eliminating free oxygen. Accordingly, it is used generally for preservation of freshness of foods and medicines, rust prevention of metals, prevention of vermin damages of cloths, prevention of degradation of work arts, pictures, and antiques.

At present, those containing iron powder as the main agent have been generally used. However, deoxidants using the iron powder involve drawbacks such that they result in troubles upon inspection since they react to a metal detector upon inspection of products, and that there has been a problem in view of safety since there may be a worry of accidental ingestion thereof.

In view of the above, various kinds of deoxidants without using iron powder have been proposed. For example, those containing ascorbic acid as a main agent (JP-A-51-136845), those containing phenols (phenol, catechol, pyrogallol, cresol, etc.) as a main agent (JP-A-10-85593), those containing glycerin as a main agent (JP-A-2003-79354), those containing 1,2-glycol as a main ingredient (JP-A-2-284645), and those containing a sugar alcohol as a main agent (JP-A-2-284647) have been proposed. However, since such organic deoxidants generate heat in the course of developing the deoxidation effect and, as a result, the temperature of an article located in contact with the deoxidant increases, they cannot be used for perishable foods tending to be denatured or foods tending to loss flavor by temperature elevation and they undergo restriction in the range of use. Further, compared with iron type deoxidants, they are less effective in the deoxidation effect and expensive, and further, some deoxidants involve a problem in view of the safety and no satisfactory deoxidant capable of replacing the iron type materials has not been found yet.

### Disclosure of the Invention

The subject of the present invention is to provide a deoxidant composition having a deoxidant effect (oxygen absorbing performance) equal to or superior to existent iron type deoxidants, capable of being put to a metal detector, scarcely generating heat during use, and gentled to human bodies or environments without giving problems to a body even when they are ingested accidentally.

As a result of earnest study for solving the subjects described above, the present inventors have found that a composition comprising a polyphenol derivative obtainable by subjecting a specified polyphenol to a reaction using an alkaline solvent under the presence of an oxygen molecule at a pH during reaction of 6.5 or more, and one member selected from water, a water-donating compound and a moisture absorbent has an excellent deoxidation effect. Further, they have also found that a composition comprising a polyphenol derivative obtainable by subjecting a specified polyphenol and an amino acid to a reaction using an alkaline solvent under the presence of an oxygen molecule at a pH during reaction of 6.5 or more, and one member selected from water, s water-donating compound and a moisture absorbent has an excellent deoxidation effect. They have made further studies and at least achieved the invention.

That is, the present invention relates to the followings.
(1) A deoxidant composition comprising:
   a polyphenol derivative obtainable by subjecting a polyphenol to a reaction using an alkaline solvent under the coexistence of an oxygen molecule at a pH during reaction of 6.5 or more; and
   one member selected from water, a water-donating compound, and a moisture absorbent.
(2) The deoxidant composition according to (1), wherein the polyphenol is a polyphenol having an o-diphenol structure.
(3) The deoxidant composition according to (1), wherein the polyphenol is a polyphenol having a p-diphenol structure.
(4) The deoxidant composition according to any one of (1) to (3), wherein the polyphenol derivative is obtainable by further adding and reacting a divalent or multivalent metal ion.
(5) The deoxidant composition according to any one of (1) to (4), wherein the polyphenol derivative is a polyphenol derivative obtainable by subjecting a plant extract which contains a polyphenol and does not substantially contains an amino acid to a reaction using an alkaline solvent under the coexistent of an oxygen molecule at a pH value during reaction of 6.5 or more.
(6) The deoxidant composition according to any one of (1) to (5), wherein the polyphenol derivative is obtainable by further adding and reacting an amino acid.
(7) A deoxidant composition comprising:
   a polyphenol derivative obtainable by subjecting a plant extract and/or plant body containing a polyphenol and an amino acid to a reaction using an alkaline solvent under the coexistent of an oxygen molecule at a pH value during reaction of 6.5 or more; and
   one member selected from water, a water-donating compound, and a moisture absorbent.
(8) The deoxidant composition according to any one of (1) to (7), wherein the water-donating compound is a compound containing crystallization water.
(9) The deoxidant composition according to any one of (1) to (8), wherein the water content in said composition is from 0.025 to 0.5 weight times with respect to the weight of the polyphenol derivative.
(10) Use of a polyphenol derivative obtainable by subjecting a polyphenol to a reaction using an alkaline solvent under the coexistence of an oxygen molecule at a pH during reaction of 6.5 or more to a deoxidant.

### Best Mode for Carrying Out of the Invention

The present invention is to be described in detail.

The invention relates to a deoxidant composition comprising a polyphenol derivative obtainable by subjecting a polyphenol to a reaction using an alkaline solvent under the coexistence of an oxygen molecule at a pH during reaction of 6.5 or more; and one member selected from water, a water-donating compound and a moisture absorbent.

First, a polyphenol derivative obtainable by subjecting a polyphenol to a reaction using an alkaline solvent under the coexistence of an oxygen molecule at a pH during reaction of 6.5 or more is explained below.

Polyphenol used in the invention means a compound having two or more phenolic hydroxyl groups in one identical molecule, and the polyphenol also includes glycosides thereof. The polyphenol used in the invention is not particularly limited so long as it is a polyphenol capable of attaining the aimed object.

Specific examples of such polyphenol include apigenin, apigenin glycoside, acacetin, alkanin, isorhamnetin, isorhamnetin glycoside, isoquercitrin, epicatechin, epicatechin gallate, epigallocatechin, epigallocatechin gallate, esculetin, ethylprotocatechuate salt, ellagic acid, catechol, gamma acid, catechin, gardenin, gallocatechin, caffeic acid, caffeic acid ester, chlorogenic acid, kaempferol, kaempferol glycoside, quercetin, quercetin glycoside, quercetagenin, genistin, genistin glycoside, gossypetin, gossypetin glycoside, gossypol, shikonin, 4-dihydroxyanthraquinone, 1,4-dihydroxynaphthalene, cyanidin, cyanidin glycoside, sinensetin, diosmetin, diosmetin glycoside, 3,4'-diphenyldiol, sinapic acid, stearyl-β-(3,5-di-tert-butyl-4-hydroxyphenyl) propionate, spinacetin, tangeritin, taxifolin, tannic acid, daphnetin, tyrosine, delphinidin, delphinidin glycoside, teaflavin, teaflavin monogallate, teaflavin bisgallate, tricetinidin, dopa, dopamine, naringenin, naringin, nordihydro guaiaretic acid, noradrenalin, hydroquinone, vanillin, patchouletin, herbacetin, vanillyl alcohol, vanitrope, vanillin propylene glycol acetal, vanillic acid, bis(4-hydroxyphenyl) sulfonic acid, bisphenol A, pyrocatechol, vitexin, 4,4'-biphenyldiol, 4-tert-butyl catechol, 2-tert-butylhydroquinone, protocatechuic acid, phloroglucinol, phenolic resin, procyanidin, prodelphinidin, phloretin, phloretin glycoside, fisetin, folin, fervasetin, fraxetin, purpurin, phloridin, peonidin, peonidin glycoside, pelargonidin, pelargonidin glycoside, petunidin, petunidin glycoside, hesperetin, hesperidin, gallic acid, gallic acid ester (such as lauryl gallate, propyl gallate and butyl gallate), mangeferin, malvidin, malvidin glycoside, myricetin, myricetin glycoside, 2,2'-methylenebis (4-methyl-6-tert-butylphenol), 2,2'-methylenebis(4-ethyl-6-tertbutylphenol), methyl atrarate, 4-methylcatechol, 5-methylcatechol, 4-methoxycatechol, 5-methoxycatechol, methylcatechol-4-carboxylic acid, 2-methylresorcinol, 5-methylresorcinol, morin, limocitrin, limocitrin glycoside, limocitrol, luteolin, luteolin glycoside, luteolinidin, luteolinidin glycoside, rutin, resorcin, resveratrol, resorcinol, leucocyanidin, and leucodelphinidin.

Among these polyphenols, polyphenols having an o-diphenol structure, for example, flavonoids such as quercetin, epicatechin, and epigallocatechin and glycosides thereof, gallic acid, gallic acid ester, chlorogenic acid, caffeic acid, caffeic acid ester, tannic acid, pyrocatechol, nordihydro guaiaretic acid, L-dopa, 4-methylcatechol, 5-methylcatechol, 4-methoxycatechol, and 5-methoxycatechol; and polyphenols having a p-diphenol structure such as hydroquinone, shikonin and homologues thereof, alkanin and homologues thereof, and purpurin.

The o-diphenol structure means a structure in which two hydroxyl groups are substituted directly on the benzene ring and the hydroxyl groups are in adjacent with each other. Further, the p-diphenol structure means a structure in which two hydroxyl groups are directly substituted on the benzene ring and the hydroxyl groups are present at para-positions.

The polyphenols may be used each alone or two or more of them may be used in combination.

The polyphenol described above can be prepared by conventional methods, or commercial products may also be purchased. Further, they may be prepared by synthesis. Further, polyphenol fractions at high concentration prepared from plants may also be used.

According to the invention, plant extracts containing polyphenols may also be used instead of the polyphenols described above. As the plant extracts in this case, plant extracts which contain polyphenol and do not substantially contain amino acid are preferred. As the plant extracts, those prepared by conventional methods may be used, or commercial products may be used. Examples of the plant extracts are shown below.

A polyphenol compound and a polyphenol-containing plant extract which does not substantially contains an amino acid may be used together.

As a method of obtaining the polyhenol derivative in the invention, it can be obtained also by subjecting a polyphenol and an amino acid to a reaction using an alkaline solvent under the coexistent of an oxygen molecule at a pH value during reaction of 6.5 or more.

While the amino acid used in the method described above is not particularly limited so long as the amino acid provides an aimed effect of the invention, an α-amino acid is particularly preferred among the amino acids. The α-amino acid means herein an amino acid in which one amino group and one carboxyl group are bonded to one identical carbon atom. Examples of the α-amino acid include glycine, alanine, valine, leucine, isoleucine, glutamic acid, aspartic acid, glutamine, asparagine, serine, threonine, lysine, hydroxylysine, alginine, histidine, cystine, methionine, phenylalanine, tyrosine, tryptophan, proline, 4-hydroxyproline, cysteine, theanine, amino acid salts (such as sodium glutamate and sodium aspartate).

Among them, glycine, alanine, glutamic acid, aspartic acid, lysine, alginine, histidine, serine, cystine, methionine, cystein, sodium glutamate, sodium aspartate, and tyrosine are preferred.

The amino acids can be available easily by purchasing commercial products. Further, the amino acids may be used each alone, or two or more of them may be used in combination. Further, a plant-extract containing an amino acid can also be used.

Further, according to the method described above, a plant extract which does not substantially contain a polyphenol and contains an amino acid can also be used instead of the amino acid. While the plant extract which does not substantially contain a polyphenol and contains an amino acid can be prepared by using conventional methods, commercial products may also be purchased. An amino acid and an amino acid-containing plant extract which does not substantially contain a polyphenol may also be used in combination.

In a case of obtaining the polyphenol derivative in the invention, examples using the polyphenol and the amino acid in combination include an example using an amino acid-containing plant extract which does not substantially contain a polyphenol and a polyphenol together, an example using a polyphenol-containing plant extract which does not substantially contain an amino acid and an amino acid together, and an example using a polyphenol-containing plant extract which does not substantially contain an amino acid and an amino acid-containing plant extract which does not substantially contain a polyphenol. Examples of plant extracts are shown below.

The ratio for the mixing amount of a polyphenol and an amino acid to be reacted upon obtaining a polyphenol derivative according to the invention is appropriately controlled depending on the polyphenol and the amino acid to be adopted. Generally, it is preferred that the polyphenol and the amino acid are mixed at a molar ratio of from 9:1 to 1:9 and it is more preferred that they are mixed at a ratio of from 3:1 to 1:3. The definition is specified for effectively utilizing the polyphenol and the amino acid when they are used as the starting substances and it does not exclude a case that either one of the both substances is present in a great amount.

Then, the alkaline solvent is to be described. The alkaline solvent according to the invention is conventionally known and it is typically an alkaline substance-containing solvent formed by dissolving an alkaline substance to a solvent such as water.

The alkaline substances are not particularly limited and the example thereof include carbonates such as sodium carbonate, potassium carbonate, sodium bicarbonate, ammonium carbonate, and guanidine carbonate; hydrogen carbonates; borates such as potassium borate and sodium borate; silicates such as potassium silicate, sodium silicate No. 1, sodium silicate No. 2, sodium silicate No. 3, sodium orthosilicate, and sodium metasilicate; sodium monohydrogen phosphate; sodium sulfite; sodium hydroxide; calcium hydroxide; potassium hydroxide; magnesium hydroxide; ammonium hydroxide; sodium pyrophosphate; and potassium pyrophosphate.

As the solvent dissolving one or plurality of such alkaline substances, water and various water containing solvents can be mentioned as preferred solvents. Further, a so-called alkaline buffer using the alkaline substance described above and an acid may also be used as the solvent.

Although the solvents described above usually exhibit alkalinity with a pH value of 7.0 or more and they are alkaline before reaction, they sometime exhibit weak acidity depending on the substance coexistent in the solvent, such as starting material including polyphenol and amino acid, and the addition amount thereof. That is, the solvent before reaction is always alkaline and a preferred effect is obtained when the pH of the solvent in the reaction system after starting the reaction is 6.5 or more upon obtaining the polyphenol derivative described above. Particularly, it is preferred that the pH during reaction is within a range from 7 to 13 and, further, it is more preferred that the pH is within a range from 8 to 13. A polyphenol derivative having a preferred deoxidant effect can be obtained by defining the pH in the reaction system within the range described above during reaction.

According to the invention, it is necessary that the polyphenol is subjected to a reaction under the coexistence of an oxygen molecule. Convenient means for supplying the oxygen molecule into the reaction system include delivery of oxygen or air into the system by utilizing an air pump, etc. (i.e., bubbling), or positive stirring of the system. Reaction under the coexistence of the oxygen molecule means a reaction with an aim of enabling to positively introduce oxygen molecules into a reaction solution thereby proceeding the reaction of the polyphenol present in the reaction system. In this case, a polyphenol derivative can be obtained more efficiently by controlling the amount of oxygen to be supplied into the reaction solution, preferably, to 1 mg/L or more and, more preferably, to 2 mg/L or more. While the oxygen supply amount can be attained, for example, by positively blowing an oxygen gas, air or a mixture thereof into the reaction system (i.e., bubbling), it can also be attained by stirring the reaction solution under the reaction condition in which the oxygen gas or air can always be contacted.

The temperature during reaction is not particularly limited and the polyphenol derivative of the invention can be obtained so long as it is from 0°C to a solvent reflux temperature. It is preferred to conduct reaction at 0°C to 60°C, more preferably, 0°C to 40°C and, further preferably, 0°C to 25°C in view of the efficiency of forming the polyphenol derivative and for avoiding thermal decomposition of the resultant polyphenol derivative.

According to the invention, while the polyphenol takes place reaction even in a short time, it is preferably reacted for about several minutes (2 min) to 24 hours, more preferably, about 10 minutes to 9 hours and, further preferably, 10 minutes to 7 hours in view of practical use. During the reaction for preparing the polyphenol derivative, pressurization is not particularly necessary but pressure may be applied.

Further, when the reaction is conducted under the coexistence of divalent or multivalent metal ions or a metal salt releasing divalent or multivalent metal ions in a reaction system, a polyphenol derivative which is further excellent in deoxidant effect and stability can be obtained.

Example of the divalent or multivalent metal ions include copper ion, zinc ion, calcium ion, magnesium ion, silver ion, aluminum ion, and manganese ion.

Further, examples of the compounds releasing the divalent or multivalent metal ions include the followings. For example, they include, copper compounds such as copper chloride, copper fluoride, copper sulfate, copper nitrate, copper hydroxide, copper citrate, copper gluconate, copper aspartate, copper glutamate, sodium copper chlorophyllin, and copper chlorophyll; zinc compounds such as zinc chloride, zinc fluoride, zinc sulfate, zinc nitrate, zinc hydroxide, zinc citrate, zinc gluconate, zinc aspartate, zinc glutamate, zinc phosphate, and zinc lactate; calcium compounds such as calcium chloride, calcium hydroxide, calcium citrate, calcium gluconate, calcium L-glutamate, calcium carbonate, calcium lactate, calcium pantothenate, calcium dihydrogen pyrophosphate, calcium propionate, calcium sulfate, tricalcium phosphate, calcium monohydrogen phosphate, calcium dihydrogen phosphate, calcium disodium ethylenediaminetetraacetate; magnesium compounds such as magnesium chloride, magnesium sulfate, magnesium hydroxide, magnesium L-glutamate, magnesium oxide, and magnesium carbonate; aluminum compounds such as aluminum chloride, aluminum hydroxide, aluminum acetate, aluminum borate, aluminum phosphate, and aluminum sulfate; and manganese compounds such as permanganate, for example, potassium permanganate and manganese sulfate. Further, titanium compounds such as titanium dioxide may also be used.

The addition amount of the metal ions is properly controlled depending on the situation of the reaction and it is generally preferred to add them such that the concentration of the metal ions in the reaction solution is from 0.00001 mM to 100 mM and, more preferably, from 0.00005 mM to 10 mM and, further preferably, from 0.1 mM to 5 mM.

According to the invention, when a polyphenol and a amino acid are reacted under the coexistence of the oxygen molecule in an alkaline solvent to obtain a polyphenol derivative, a plant extract containing a polyphenol and an amino acid can be used instead of the polyphenol and the amino acid. The plant extract in this case is preferably a plant extract containing a polyphenol and an amino acid each at high concentrations. As the plant extracts, those prepared by conventional methods may be used or commercial products may also be used.

For example, the polyphenol derivative according to the invention can be obtained by adding a plant extract containing a polyphenol and an amino acid, that is, an extract from at least one part selected from leaves, stalks, roots and seeds (fruits) of plants to an alkaline solvent, controlling the pH of the reaction solution during reaction to 6.5 or more, and treating them at an oxygen supply amount of 1 mg/L or more, at a reaction temperature of from 0°C to a solvent reflux temperature for a reaction time of from several minutes to 24 hours. Examples of the alkaline substance and the solvents in this case include those described above and they are obtainable by controlling the reaction conditions, etc. within the range described above. In a case of using the plant extract containing the polyphenol and the amino acid instead of the polyphenol and the amino acid, at least one member selected from a polyphenol-containing plant extract which does not substantially contain an amino acid, an amino acid-containing plant extract which dose not substantially contain a polyphenol, a polyphenol, and an amino acid may also be used together. Further, examples of the plant extracts are shown below.

According to the invention, when a polyphenol derivative is obtained by subjecting the polyphenol and the amino acid to a reaction using an alkaline solvent under the coexistence of oxygen molecule at a pH value during reaction of 6.5 or more, a plant body containing a polyphenol and an amino acid may also be used instead of the polyphenol and the amino acid. The plant body in this case preferably contains the polyphenol and the amino acid at high concentrations.

For example, the polyphenol derivative according to the invention can be obtained also by adding a plant body containing a polyphenol and an amino acid, that is, at least one part selected from leaves, stalks, roots, and seeds (fruits)of plants to an alkaline solvent, controlling the pH of the reaction solution during reaction to 6.5 or more, and treating them at an oxygen supply amount of 1 mg/L or more, at a reaction temperature of from 0°C to a solvent reflux temperature for a reaction time of from several minutes to 24 hours. Examples of the alkaline substance and the solvents in this case include those described above and they are obtained by controlling the reaction conditions, etc. in the same manner as described above. As the plant body, plants exemplified for the plant extracts described below can be used. In a case of using the plant body containing the polyphenol and the amino acid instead of the polyphenol and the amino acid, at least one member selected from a polyphenol containing plant extract which does not substantially contain an amino acid, an amino acid-containing plant extract which does not substantially contain a polyphenol, a plant extract containing a polyphenol and an amino acid, a polyphenol and an amino acid may also be used together. The amount of "not substantially containing" the amino acid or the polyphenol is such an amount as giving no effects on the reaction and this is an amount out of the detection limit when measured in accordance with a generally known method.

Examples of plant extracts include those extracted from aloe, anise seed, elderberry, eleutherococcus, plantago, olive, orange flower, all spice, oregano, valeriana fauriei, chamomile, capsicum pepper, cardamom, cassia, garlic, caraway seed, clove, cumin seed, burdock, cola nitida, coriander seed, Chinese gall, sweet potato, saffron, japanese pepper, juniper berry, cinnamon, potato, ginger, star-anise, St. John's wort, celery seed, savory, sesame, pie plant, tarragon, turmeric, thistle, anethum graveolens, nutmeg, nettle, hibiscus, hamamelis, birch, basil, bitter orange, fennel, primrose, fenugreek, verbena, bay laurel, hop, boldo, horseradish, poppy seed, gallnut, marigold, marrow, marjoram, mustard, milfoil, mint leaves, melissa, mace, linden, Gentiana scabra var. buergeri, rosehip, rosemary, Rosmarinus officinalis, sunflower seed, grape pericarp, apple, carrot leaf, banana, strawberry, apricot, peach, plum, pineapple, pear, persimmon, cherry, papaya, mango, avocado, melon, loquat, fig, kiwifruit, prune, blue berry, black berry, raspberry, cranberry, coffee beans, cacao beans, grape seed, grape fruits seed, pecan nuts, cashew nuts, chestnuts, coconut, peanuts, walnut, green tea leaf, black tea leaf, oolong tea leaf, tobacco, perilla leaf, thyme, sage, lavender, spearmint, peppermint, blessed thistle, hyssop, sweet basil, marigold, dandelion, artichoke, matricaria chamomilla, Agrimonia pilosa var. japonica, licorice, anise, yarrow, eucalyptus, wormwood, balm, Angelica pubescens, fenugreek, Anaheim pepper, fennel, chili pepper, coriander seed, caraway seed, fennel seed, ginger, horseradish, marjoram, common marjoram, mustard, parsley, pepper, tarragon,turmeric, wasabi, dill seed, and citrus fruit. The plant extracts may be used by combining two or more of them.

According to the invention, in a case of using the plant extract upon obtaining the polyphenol derivative, a polyphenol derivative at a high concentration can be obtained also by adsorbing a polyphenol or a polyphenol and an amino acid in the plant extract to a resin or the like in accordance with a customary method, followed by bringing the same into contact with an alkaline solvent and air or oxygen.

The reaction solution containing the polyphenol derivative obtained as described above may also be condensed further by using means such as column, filtration or solvent extraction.

According to the invention, for the polyphenol derivative as an effective deoxidation ingredient, a liquid ingredient is usually removed from the reaction solution by a conventional method such as concentration, filtration, vacuum drying or freeze-drying to obtain a solid polyphenol derivative.

The polyphenol derivative as the effective ingredient of the invention is often colored and the color thereof changes depending on the kind of the polyphenol as the starting material, absence or presence of the amino acid, the kind and the quantity ratio of the amino acid, etc. Further, since the density of color also changes depending on the reaction time and the pH, it cannot be generally defined.

For example, referring to chlorogenic acid, a reaction solution of a pale yellow color upon start of the reaction turns brown with lapse of time and then dark brown. In a case of quercetin, a reaction solution of a pale pink color upon start of the reaction increases redness with lapse of time and gradually turns deep wine red. In a case of gallic acid, a reaction solution of a pale yellow color upon start of the reaction is tinted with green with lapse of time and then turns dark green. In a case of pyrocatechol, a reaction solution of a pale pink color upon start of the reaction turns brown with lapse of time and then turns dark brown.

Further, in a case of selecting and reacting glycin as the amino acid, the reaction solution with chlorogenic acid is green, the reaction solution with (+)-catechin is red, the reaction solution with protocatechuic acid is red, the reaction solution with pyrocatechol is pale pink, the reaction solution with esculetin is brown, the reaction solution with hydroquinone is brown, the reaction solution with quercetin is red, and the reaction solution with gallic acid is dark green.

For the reaction of most of polyphenols or between polyphenol and amino acid, while the reaction solution has a pale color upon start of the reaction, the color of the reaction solution tends to be thick gradually with lapse of the reaction time and finally grown rich in dense color. The time in which the color of the reaction solution is thickened changes depending on the kind of the polyphenol, combination of the polyphenol and the amino acid, and the reaction condition. While it is about several minutes after starting the reaction, it may sometimes be about 20 min or about 30 min after starting.

The polyphenol derivative prepared in the invention plays a role as an effective ingredient in the deoxidant composition. The polyphenol derivative is a mixture having various chemical structures and, for example, reaction products of a polyphenol as the starting material, polymerizates prepared from polyphenol, reaction products from polyphenol and amino acid and polymerization products prepared from polyphenol and amino acid also belong to the category of the polyphenol derivatives of the invention so long as they provides an intended effect of the invention.

The molecular weight of the obtained polyphenol derivative, that is, the molecular weight of the deoxidation ingredient in the deoxidant is preferably more than the molecular weight of the polyphenol or the sum of the molecular weight for the polyphenol and the amino acid as the starting material before reaction and is also 10,000 or less. More preferably, it ranges from the molecular weight of the polyphenol or the sum of the molecular weight for the polyphenol and the amino acids to 5,000.

The molecular weight of the polyphenol derivative can be measured by the following method. That is, a reaction solution containing the polyphenol derivative prepared by various methods described above is concentrated by centrifugal separation, and it is determined whether the concentrates pass through a filtration membrane having predetermined pores or remains on the filtration membrane, and the molecular weight can be determined corresponding to the pores of the filtration film where the concentrates remain on the filtration membrane. Commercial products may be used as the filtration membrane used herein.

For the deoxidant composition according to the invention, polyphenol derivatives obtained from different polyphenols, plant extracts, or plant bodies can be used in combination.

The deoxidant composition of the invention comprises the polyphenol derivative obtained as described above and one member selected from water, a water-donating compound and a moisture absorbent. A combination of a polyphenol derivative and water and a combination of a polyphenol derivative and a water-donating compound are particularly preferred with a viewpoint of the deoxidation effect.

Water to be coexistent with the polyphenol derivative includes purified water. The mixing amount of the coexistent water is, preferably, from 0.025 to 0.5 weight times and, more preferably, from 0.1 to 0.3 weight times with respect to the weight of the solid content of the polyphenol derivative.

The water-donating compound to be coexistent with the polyphenol derivative includes compounds containing crystallization water. As the compounds containing crystallization water, any of acidic compounds, neutral compounds, or alkaline compounds may be used so long as they contain crystallization water. Further, the content of crystallization water in the compound containing crystallization water is not particularly restricted. However, it tends to be more preferred that the content of crystallization water in the compound is larger.

The compounds containing crystallization water specifically include trisodium citrate dehydrate, sodium acetate trihydrate, sodium sulfite heptahydrate, sodium tetraborate decahydrate (borax), calcium chloride dehydrate, calcium chloride hexahydrate, ammonium borate octahydrate, ammonium oxalate monohydrate, ammonium carbonate monohydrate, sodium carbonate trihydrate, sodium carbonate decahydrate, calcium nitrate tetrahydrate, calcium chloride tetrahydrate, calcium citrate tetrahydrate, calcium lactate pentahydrate, magnesium chloride hexahydrate (brine), calcium sulfate dehydrate (gypsum), sodium sulfate decahydrate (salt cake), sodium sulfite heptahydrate, trisodium phosphate dodecahydrate, disodium hydrogen phosphate dodecahydrate, etc. Among them, sodium carbonate decahydrate, magnesium chloride hexahydrate (brine), sodium sulfate decahydrate (salt cake), sodium sulfite heptahydrate, trisodium phosphate dodecahydrate, and disodium hydrogen phosphate dodecahydrate are preferred with a viewpoint of the effect and cost and, further sodium carbonate decahydrate salt, sodium sulfate decahydrate (salt cake), and sodium sulfite heptahydrate are particularly preferred. The compounds may be used alone or two or more of them may be used in combination.

The addition amount of the water-donating compound in the deoxidant composition of the invention is not particularly restricted and, for providing more excellent effect, it is preferably from 0.01 to 3 weight times and, more preferably, from 0.1 to 3 weight times with respect to the weight of the solid of the polyphenol derivative.

According to the deoxidant composition of the invention, the polyphenol derivative and the moisture absorbent can also be present together. According to the invention, since the moisture absorbent being in contact with the polyphenol derivative efficiently absorbs moisture content in atmospheric air when the moisture absorbent is coexistent, this is more preferred for the development of the deoxidant effect. As the example of the moisture absorbent, salts and alkalis showing the property of strongly absorbing the moisture content in air are used and, particularly, salts having high hygroscopicity are practical.

Specifically, they include lithium chloride, sodium chloride, potassium chloride, calcium chloride, magnesium chloride, magnesium ammonium chloride, magnesium sodium chloride, magnesium potassium chloride, manganese chloride, manganese potassium chloride, antimony chloride, cobalt antimony chloride, zinc chloride, iron chloride, bismuth chloride, beryllium chloride, calcium bromide, zinc bromide, copper bromide, iron bromide, cobalt bromide, cadmium bromide, lithium iodide, sodium iodide, magnesium iodide, calcium iodide, iron iodide, nickel iodide, sodium nitrite, potassium nitrite, magnesium nitrite, ammonium nitrate, lithium nitrate, sodium nitrate, calcium nitrate, beryllium nitrate, magnesium nitrate, manganese nitrate, cerium nitrate, cerium ammonium nitrate, iron nitrate, copper nitrate, lithium chlorate, calcium chlorate, magnesium chlorate, zinc chlorate, cadmium chlorate, cobalt chlorate, copper chlorate, potassium carbonate, lithium sulfate, zinc ammonium sulfate, antimony sulfate, iron sulfate, cadmium ammonium sulfate, ammonium thiosulfate, potassium phosphite, ammonium phosphite, potassium phosphite, hydrazinium phosphite, sodium hypophosphite, potassium hypophosphite, sodium permanganate, calcium permanganate, strontium permanganate, magnesium permanganate, zinc permanganate, sodium hydroxide, and potassium hydroxide. They may be used each alone or two or more of them may be used in combination.

The coexistent amount of the moisture absorbents may differ depending on the kind of the compound and the circumstance and the use to be applied. Usually, it is preferably coexistent by from 0.5 to 20 weight times with respect to the weight of the solid of the polyphenol derivative. It is more preferably from 1 to 10 weight times.

According to the invention, the polyphenol derivative obtained as described above may be supported on an optional support, for example, a solid or gel-like material and may be incorporated with at least one member selected from water, water-donating compound and a moisture absorbent to form a deoxidant composition.

Preferred solids include supports having porosity, for example, saccharides such as dextrin, cyclodextrin, glucose, lactose, and starch; plastic supports such as plastic particles or foamed plastics; inorganic particles such as silica gel particle, calcium silicate, diatomaceous earth, active white clay, vermiculite, alumina, zeolite, pearlite, clay minerals, biscuits, ceramics, metals, glass and activated carbon; various kinds of water absorbing polymers; natural supports such as buckwheat husks, rice husks, saw dusts and baked products thereof; fibrous supports such as fibers, fiber lumps, fiber bundles, nonwoven fabrics, knitted products, fiber products, pulp, paper and paper products (corrugated boards, honeycombs, etc.); synthetic molecules such as crown ether, criptant, cyclofan and calixarene. Herein, "having porosity" includes both of a case where the support per se is porous and a case where a number of voids are present between the supports.

Examples of the gel-like material include aqueous gelating agents such as carrageenan, carboxyvinyl polymer, crosslinked polyacrylic acid, hydroxyethyl cellulose, carboxymethyl cellulose, sodium acrylate, agar, gelatin, pectin, furcellaran, xanthan gum, locust beam gum, gellan gum and collagen; oily gelating agents such as metal soap and dibenzylidene sorbitol, which may be used each alone or in combination.

The method of supporting the polyphenol derivative of the invention on the solid support includes, for example, a method of forming a polyphenol derivative in a state of solution, depositing the same to a support by coating, impregnating, spraying or like other means and then drying the same (for example, air drying at 60°C for 12 hours). The method of forming the polyphenol derivative into the state of the solution includes a method, for example, of dissolving a solid polyphenol derivative into a solvent. Preferred examples of the solvent include water, hydrous alcohol, lower alcohol (methanol, ethanol, butanol, propanol, etc.), polyol type organic solvent (ethylene glycol, propylene glycol, etc.), benzyl alcohol, glycerol, monoglyceride, diglyceride, animal and plant oils, essential oils, etc. Another method of supporting the polyphenol derivative of the invention on the solid support also includes a method of depositing an obtained reaction solution of the polyphenol derivative directly on a support by coating, impregnating, spraying, or like other means and then drying the same (for example, air drying at 60°C for 12 hours).

A method of supporting on the gel-like support includes a method of forming the polyphenol derivative into the state of a solution, adding a gelating agent and stirring them. Further, another method of supporting on the gel-like support includes adding a gelating agent to the obtained solution of the polyphenol derivative and then stirring the same.

Further, the deoxidant composition of the invention can be kneaded with a thermoplastic resin, extruded and sheeted to form a deoxidant sheet. The thermoplastic resin include polyolefins such as polypropylenes, polyethylenes and elastomers; polyamides such as nylon; polyesters such as polyethylene terephthalate; polyfluoroolefins such as polytetrafluoro ethylene; polystyrene; and vinyl chloride. Among them, the polyolefin resins are particularly preferred with a viewpoint of fabricability.

The polyphenol derivative of the invention and one member selected from water, a water-donating compound and a moisture absorbent may be supported on calcium silicate or the like, followed by pelleting or granulating the same optionally with addition of a binder, or being compressed into a form of a tablet to obtain a deoxidant composition. The binder includes synthetic polymeric compounds such as polyvinyl alcohol, polyvinyl acetate, polyacrylic acid and polyurethane; cellulosic compounds such as methyl cellulose, ethyl cellulose and carboxymetnyl cellulose; and natural compounds such a guar gum, xanthane gum, tragacanth gum, carrageenan and sodium alginate.

Further, the polyphenol derivative of the invention may be supported on calcium silicate or the like and pelleted or granulated optionally with addition of a binder, or compressed into a tablet, which may be mixed with one member selected from water, a water-donating compound and moisture absorbent to form a deoxidant composition. The binder includes those described above.

The deoxidant composition of the invention can be contained in an air permeable packaging material to form a deoxidant package. As the packaging method, for example, after mixing each of the ingredients in the deoxidant composition, the composition is packed in a small bag sealed by heat sealing at the periphery of the air permeable packaging material by a packing machine to form a deoxidation packaging product. The material for the air permeable packaging includes apertured plastic films, non woven fabrics, paper and resin films. In a case of mixing the ingredients in the deoxidant composition of the invention, when the deoxidant composition is contained in the air permeable packaging material, it is preferably conducted, for example, in an oxygen-shielded atmosphere such as a nitrogen atmosphere. Further, it is preferably stored in an oxygen-shielded atmosphere, for example, in an nitrogen atmosphere till it is used as the deoxidant.

The deoxidant composition of the invention can be used, for example, for foods, drinks, medicines, pet foods, animal feed, cosmetics, perfumes, metal products, clothes, bedclothes, fibrous products, furs, art works, pictures, antiques, musical instruments, tires, rubbers, machines, electronic parts, plastics, photographic films, medical instruments, pigments and dyes. They can be used for the foods of kinds including, for example, western confectionaries such as cookies, baum kuchens, doughnuts and chocolates; munches such as potato chips; Japanese confectionaries such as rice crackers, buns with bean-jam and castellas; sea food processing products such as fish pastes, fish sausages, dried bonits, dried fishes and dried small sardines; meat products such as salamis, sausages, hams, bacons and beef jerkies; dairy products such as cheese; candies; Japanese tea; black tea; oolong tea; coffee; spice; dried laver; soybean paste; fish and vegetable flake; sesame; nuts; bread; noodles; rice; wheat; rice cake; beans and serials.

The deoxidant composition of the invention can be used in various forms and by various methods, for example, by sealing in a package or container for foods or medicines, leaving in a closet, armoire, or chest, shoe box, leaving in a casing or show case for artworks, pictures and antiques, musical instruments, etc., storing and sealing together with an article to be put to deoxidation in an air impermeable packaging material or airtight container, leaving in adjacent with an article to be put to deoxidation, or the like.

The present invention provides a deoxidant composition having an excellent deoxidation effect. Further, the deoxidant composition of the invention can provide a deoxidant composition which is gentle to human bodies or environments that does not generate heat during use, can be put to a metal detector and gives no problem even when it is ingested accidentally.

It has been found that when one member selected from water, a water-donating compound and an moisture absorbent is coexistent with the polyphenol derivative of the invention, it provides more excellent deoxidation effect than that of iron oxide generally utilized as a deoxidant.

By deoxidation, the deoxidant composition of the invention can prevent denaturation and degradation of products to which it is applied, such that it can prevent putrefaction, mildew, oxidative degradation, discoloration and loss of flavor of foods, can provide insect proofness and mildew proofness of clothes, can prevent rusting of metal products, can prevent denaturation of chemical products, and can prevent lowering of efficacy and denaturation of medicines.

### Example

The present invention is to be described more specifically with reference to examples but the invention is not at all limited thereto.

### Preparation Example of Polyphenol Derivative

### Preparation Example 1

Twenty mmol of gallic acid was added into a stirring vessel containing 1 L of an aqueous solution of 0.05 M sodium carbonate (pH: 11.2) and stirred vigorously under a condition where air can flow freely and the surface of the reaction solution can be in sufficient contact with air, at 25°C for 3 hours. Then, the reaction solution was freeze-dried to obtain 9.06 g of a powder containing a polyphenol derivative (yields to gallic acid: 241%).

### Preparation Example 2

To 80 g of dried green tea leaves, 1600 ml of an aqueous solution of 50 mM sodium carbonate was added, followed by stirring vigorously in a state capable of being in contact with air at 30°C for one hour (reaction solution pH: 8.7). After filtration of the reaction solution, the filtrate was freeze-dried to obtain 51.8 g of a powder containing a polyphenol derivative (yield to dried tea leaves: 640).

### Preparation Example 3 Derived from raw coffee bean

To 1 kg of raw coffee bean, 6 L of water was added and extracted at 95°C for 2 hours, and the obtained extract was adsorbed to 1.5 L of ion exchange resin HP-20. After washing the resin after absorption with water, a polyphenol fraction was leached by using 4 L of an aqueous solution of 0.08 M sodium carbonate. The leached solution was stirred vigorously at 20°C for 3 hours thereby taking oxygen into the liquid to conduct oxidizing reaction (pH of reaction solution: 8.7). After filtration of the extract, the filtrate was freeze-dried to obtain 52 g of a powder containing a polyphenol derivative (yield to raw coffee bean: 5.2%).

### Preparation Example 4 Derived from apple

To 1 kg of dried apple pericarps (variety: Fuji), 10 L of an aqueous solution of 0.05 M sodium carbonate was added and reflux extraction was conducted for one hour. The temperature of the liquid extract was rapidly cooled and, at a point of 20°C, the liquid extract was vigorously stirred for 2 hours thereby taking oxygen into the liquid to conduct oxidizing reaction (pH of reaction solution: 8.5). After filtration of the liquid extract, the filtrate was freeze-dried to obtain 1.02 kg of a powder containing a polyphenol derivative (yield to dried apple pericarp: 102%).

### Preparation Example 5 Derived from banana

To 1 kg of a dried banana pericarp, 20 L of an aqueous solution of 0.05 M sodium carbonate was added and vigorously stirred at 20°C for 3 hours thereby taking oxygen into the liquid to conduct oxidizing reaction (pH of reaction solution: 8.9). After filtration of the reaction solution, the filtrate was freeze-dried to obtain 541 g of a powder containing a polyphenol derivative (yield to dried banana pericarp: 54.1%).

### Preparation Example 6 Derived from grape

To 1 kg of a grape pericarp extract (manufactured by Polyphenolic Co.), 20 L of an aqueous solution of 0.05 M sodium carbonate was added and vigorously stirred at 20°C for 3 hours thereby taking oxygen into the liquid to conduct oxidizing reaction (pH of reaction solution: 8.7). The reaction solution was freeze-dried to obtain 1.11 kg of a powder containing a polyphenol derivative (yield to grape pericarp extract: 111.0%).

### Preparation Example 7 Derived from rosemary

To 1 kg of a dried rosemary leaves, 10 L of an aqueous solution of 0.05 M sodium carbonate was added and stirred vigorously at 20°C for 3 hours to take oxygen into the liquid to conduct oxidizing reaction (pH of reaction solution: 8.5). After filtration of the liquid extract, the filtrate was freeze-dried to obtain 283 g of a powder containing a polyphenol derivative (yield to dried rosemary leaves: 28.3%).

### Preparation Example 8 Derived from marjoram

To 1 kg of a dried marjoram leaves, 20 L of an aqueous solution of 0.05 M sodium carbonate was added and stirred vigorously at 20°C for 3 hours thereby taking oxygen into the liquid to conduct oxidizing reaction (pH of reaction solution: 8.9). After filtration of the liquid extract, the filtrate was freeze-dried to obtain 415 g of a powder containing a polyphenol derivative (yield to dried marjoram leaves: 41.5%).

### Preparation Example 9 Derived from thyme

To 1 kg of a dried thyme, 20 L of an aqueous solution of 0.05 M sodium carbonate was added and stirred vigorously at 20°C for 3 hours thereby taking oxygen into the liquid to conduct oxidizing reaction (pH of reaction solution: 9.1). After filtration of the liquid extract, the filtrate was freeze-dried to obtain 355 g of a powder containing a polyphenol derivative (yield to dried thyme: 35.5%).

### Preparation Example 10 Derived from sage

To 1 kg of a dried sage, 20 L of an aqueous solution of 0.05 M sodium carbonate was added and stirred vigorously at 20°C for 3 hours thereby taking oxygen into the liquid to conduct oxidizing reaction (pH of reaction solution: 9.2). After filtration of the liquid extract, the filtrate was freeze-dried to obtain 409 g of a powder containing a polyphenol derivative (yield to dried sage: 40.9%).

### Preparation Example 11 Derived from perilla

To 1 kg of a dried perilla as a residue after extraction of essential oils, 15 L of an aqueous solution of 0.05 M sodium carbonate was added and stirred vigorously at 20°C for 3 hours thereby taking oxygen into the liquid to conduct oxidizing reaction (pH of reaction solution: 9.1). After filtration of the liquid extract, the filtrate was freeze-dried to obtain 315 g of a powder containing a polyphenol derivative (yield to dried perilla: 31.5%).

### Preparation Example 12 Derived from olive

To 1 kg of a dried olive fruit as a residue after extraction of essential oils, 20 L of an aqueous solution of 0.05 M sodium carbonate was added and stirred vigorously at 20°C for 3 hours thereby taking oxygen into the liquid to conduct oxidizing reaction (pH of reaction solution: 8.7). After filtration of an extract, the filtrate was freeze-dried to obtain 332 g of a powder containing a polyphenol derivative (yield to dried olive fruit: 33.2%).

### Preparation Example 13 Derived from peppermint

To 1 kg of a dried peppermint as a residue after extraction of essential oils, 15 L of an aqueous solution of 0.05 M sodium carbonate was added and stirred vigorously at 20°C for 3 hours thereby taking oxygen into the liquid and conduct oxidizing reaction (pH of reaction solution: 8.9). After filtration of the liquid extract, the filtrate was freeze-dried to obtain 305 g of a powder containing a polyphenol derivative (yield to dried peppermint: 30.5%).

### Preparation Example 14 Derived from burdock

To 1 kg of a dried burdock powder, 5 L of an aqueous solution of 70% ethanol was added and reflux extraction was conducted for 2 hours. After filtration of the liquid extract, the filtrate was concentrated to about 500 mL by an evaporator and then 5 L of an aqueous solution of 0.05 M sodium carbonate was added and stirred vigorously at 15°C for 3 hours thereby taking oxygen into the liquid to conduct oxidizing reaction (pH of the reaction solution: 8.9). The reaction solution was freeze-dried to obtain 214 g of a powder containing a polyphenol derivative (yield to dried burdock powder: 21.4%).

### Preparation Example 15 Derived from potato

To 1 kg of a dried potato tuber, 5 L of an aqueous solution of 70% ethanol was added and reflux extraction was conducted for 2 hours. After filtration of the liquid extract, the filtrate was concentrated to about 500 mL by an evaporator and then 5 L of an aqueous solution of 0.05 M sodium carbonate was added and stirred vigorously at 15°C for 3 hours thereby taking oxygen into the liquid to conduct oxidizing reaction (pH of the reaction solution: 9.2). The reaction solution was freeze-dried to obtain 170 g of a powder containing a polyphenol derivative (yield to dried potato tuber: 17.0%).

### Test Example 1: Comparison of deoxidation effect with existent products

Each of deoxidation compositions described in the following table was put in a small bag of exclusive use (50 mm x 55 mm) and tightly sealed to form a deoxidant package. The package was put in a 2 L Tedler (registered trade mark) bag and tightly sealed. By using an air pump, 1500 mL of air was charged into the Tedler (registered trade mark) bag, which was kept at a room temperature (21°C) for 72 hours, and the oxygen absorption amount was measured by an oxygen monitor (JKO-25 version II 25 ML II, manufactured by Jiko Co., Ltd.). The results of the oxygen concentration in the Tetra (registered trade mark) bag are shown in Table 1.

**Table 1**

| | Deoxidant composition | Addition amount (g) | Oxygen concentration (%) |
|---|---|---|---|
| Comparative Example | Not added | - | 20.7 |
| | Iron type deoxidant (commercial product) | 2.0 | 19.3 |
| | Gallic acid/sodium carbonate/water | 2.0/2.0/0.5 | 13.9 |
| | Glycerin | 2.0 | 21.0 |
| Example | Preparation Example 1/water | 2.0/0.5 | 12.1 |
| | Preparation Example 2/water | 2.0/0.5 | 10.3 |
| | Preparation Example 3/water | 2.0/0.5 | 9.2 |
| | Preparation Example 4/water | 2.0/0.5 | 12.3 |
| | Preparation Example 5/water | 2.0/0.5 | 13.2 |
| | Preparation Example 6/water | 2.0/0.5 | 9.4 |
| | Preparation Example 7/water | 2.0/0.5 | 10.1 |
| | Preparation Example 8/water | 2.0/0.5 | 10.5 |
| | Preparation Example 9/water | 2.0/0.5 | 10.8 |
| | Preparation Example 10/water | 2.0/0.5 | 10.7 |
| | Preparation Example 11/water | 2.0/0.5 | 11.8 |
| | Preparation Example 12/water | 2.0/0.5 | 12.1 |
| | Preparation Example 13/water | 2.0/0.5 | 12.2 |
| | Preparation Example 14/water | 2.0/0.5 | 10.8 |
| | Preparation Example 15/water | 2.0/0.5 | 12.5 |
| | Preparation Example 1/sodium carbonate decahydrate | 2.0/0.5 | 10.3 |
| | Preparation Example 1/calcium chloride | 2.0/2.0 | 17.6 |

| | | | |
|---|---|---|---|
| Iron type deoxidant (commercial product): Ageless (registered trade mark) 20PK (Mitsubishi Gas Chemical Company, Inc.) | | | |

As apparent from the result of Table 1, the products of the invention shows a remarkably high deoxidation effect compared with that of the commercial products and also the heat generation is scarcely recognized. On the other hand, while the deoxidant composition of the comparative example formed by mixing gallic acid/sodium carbonate/water shows a high deoxidation effect, remarkable heat generation is recognized. Further, for glycerin which is considered to have the deoxidation effect, no deoxidation effect is recognized in the present experimental system.

### Test Example 2 Moisture content and deoxidation activity

Each of deoxidation compositions described in the following table was put in a small bag of exclusive use (50 mm x 55 mm) and tightly sealed to form a deoxidant package. The package was put in a 2 L Tedler (registered trade mark) bag and tightly sealed. By using an air pump, 1500 mL of air was charged into the Tedler (registered trade mark) bag, which was kept at a room temperature (21°C) for 72 hours, and the oxygen absorption amount was measured by an oxygen monitor (JKO-25 version II 25 ML II, manufactured by Jico Co., Ltd.). The results of the oxygen concentration in the Tedler (registered trade mark) bag are shown in Table 2.

**Table 2**

| Deoxidant composition | | Weight time of water to weight or polyphenol derivative | Oxygen concentration (%) |
|---|---|---|---|
| Polyphenol derivative obtained in Preparation Example 1 | Water | | |
| - | - | - | 20.7 |
| 2.0g | - | - | 20.7 |
| | 0.02 g | 0.01 | 20.7 |
| | 0.05 g | 0.025 | 17.4 |
| | 0.10 g | 0.05 | 16.0 |
| | 0.20 g | 0.1 | 12.2 |
| | 0.30 g | 0.15 | 11.9 |
| | 0.40 g | 0.2 | 11.9 |
| | 0.50 g | 0.25 | 12.1 |
| | 1.00 g | 0.5 | 17.8 |
| | 2.00 g | 1 | 18.3 |

As apparent from the result of Table 2, more excellent deoxidation effect is recognized under the condition where water is present by 0.025 weight times or more with respect to the weight of the polyphenol derivative. Deoxidant composition in which water is coexistent in a range from 0.1 to 0.25 weight times with respect to the weight of the polyphenol derivative shows particularly excellent deoxidation effect. Further, for the deoxidant composition in which water is 0.01 weighttimes or less with respect to the weightof the polyphenol derivative, the oxidation effect cannot be recognized. Further, none of the products of the invention shows heat generation.

### Test Example 3 Amount of water-donating compound and deoxidation activity

Each of deoxidation compositions described in the following table was put in a small bag of exclusive use (50 mm x 55 mm) and tightly sealed to form a deoxidant package. The package was put in a 2 L Tedler (registered trade mark) bag and tightly sealed. By using an air pump, 1500 mL of air was charged into the Tedler (registered trade mark) bag, which was kept at a room temperature (21°C) for 72 hours, and the oxygen absorption amount was measured by an oxygen monitor (JKO-25 version II 25 ML II, manufactured by Jiko Co. Ltd.). The result of the oxygen concentration in the Tedler (registered trade mark) bag is shown in Table 3.

**Table 3**

| Deoxidant composition | | Weight times of sodium carbonate decahydrate to weight of polyphenol derivative | Oxygen concentration (%) |
|---|---|---|---|
| Polyphenol derivative obtained in Preparation Example 1 | Sodium carbonate decahydrate | | |
| - | - | - | 20.7 |
| 2.0 g | - | - | 20.7 |
| | 0.2 g | 0.10 | 14.9 |
| | 0.5 g | 0.25 | 10.3 |
| | 0.6 g | 0.30 | 10.1 |
| | 1.0 g | 0.50 | 9.8 |
| | 1.4 g | 0.70 | 9.6 |
| | 2.0 g | 1.00 | 9.4 |
| | 4.0 g | 2.00 | 8.9 |

As apparent from the result of Table 3, the deoxidation effect is higher as the addition amount of the sodium carbonate decahydrate to the polyphenol derivative is increased. Further, none of the products of the invention shows heat generation

### Test Example 4 Effect of various types of compound containing crystallization water

Each of deoxidation compositions described in the following table was put in a small bag of exclusive use (50 mm x 55 mm) and tightly sealed to form a deoxidant package. The package was put in a 2 L Tedler (registered trade mark) bag and tightly sealed. By using an air pump, 1500 mL of air was charged into the Tedler (registered trade mark) bag, which was kept at a room temperature (21°C) for 72 hours, and the oxygen absorption amount was measured by an oxygen monitor (JKO-25 version II 25 ML II, manufactured by Jiko Co. Ltd.). The results of the oxygen concentration in the Tedler (registered trade mark) bag are shown in Table 4.

**Table 4**

| Deoxidant composition | | |
|---|---|---|
| Polyphenol derivative obtained in Preparation Example 1 | Compound containing crystallization water | Oxygen concentration (%) |
| - | - | 20.7 |
| 2.0 g | Sodium carbonate decahydrate (2.0 g, pH11) | 9.4 |
| | Magnesium chloride hexahydrate (2.0 g, pH 5 to 6) | 15.4 |
| | Sodium sulfate decahydrate (2.0 g, pH6) | 10.9 |
| | Sodium sulfite decahydrate (2.0 g, pH 8 to 9) | 10.9 |
| | Calcium chloride tetrahydrate (2.0 g, pH 5 to 6) | 14.4 |
| | Trisodium phosphate dodecahydrate (2.0 g, pH11) | 13.2 |

The pH value in the table is a value in a case of dissolving of 2.0 g of each of the compounds containing crystallization water at a room temperature into 50 mL of water.

As shown in Table 4, the compound containing crystallization water coexistent in the invention shows the deoxidation effect in any case where they are acidic, neutral or alkaline.

### Test Example 5

Each of deoxidation compositions described in the following table was put in a small bag of exclusive use (50 mm × 55 mm) and tightly sealed to form a deoxidant package. The package was put in a 2 L Tedler (registered trade mark) bag and tightly sealed. By using an air pump, 1500 mL of air was charged into the Tedler (registered trade mark) bag, which was kept at a room temperature (21°C) for 48 or 72 hours, and the oxygen absorption amount was measured by an oxygen monitor (JKO-25 version II 25 ML II, manufactured by Jiko Co., Ltd.). The results of the oxygen concentration in the Tedler (registered trade mark) bag are shown in Table 5.

**Table 5**

| Deoxidant composition | Addition amount (g) | Oxygen concentration (%) |
|---|---|---|
| Not added | - | 20.7 |
| Iron type deoxidant (commercial product)** | 2.0 | 19.3 |
| Preparation Example 1/water* | 1.00/0.25 | 13.9 |
| | 2.00/0.50 | 13.3 |
| | 4.00/1.00 | 11.3 |
| | 6.00/1.50 | 11.1 |
| Preparation Example 1/sodium carbonate decahydrate** | 0.20/0.20 | 20.3 |
| | 0.25/0.25 | 19.5 |
| | 0.50/0.50 | 18.5 |
| | 1.00/1.00 | 16.5 |
| | 2.00/2.00 | 10.3 |

| | | |
|---|---|---|
| *) Kept for 48 hours **) Kept for 72 hours Iron type deoxidant (commercial products): Ageless (registered trade mark) 20 PK (Mitsubishi Gas Chemical Company, Inc.) | | |

It is found that the Preparation Example 1/sodium carbonate decahydrate as the deoxidant composition of the invention shows an oxidation concentration appropriately identical with that of commercial products, at the mixing amount of 0.25 g/0.25 g.

### Industrial Applicability

The deoxidant composition of the invention is a deoxidant composition gentle to human bodies and environments which is excellent in the deoxidation effect, does not generate heat during use, can be put to a metal detector and gives no problem on a human body even when it is ingested accidentally. By deoxidation, the deoxidant composition of the invention is excellent in preventing denaturation and degradation of products to which it is applied, such that it can prevent putrefaction, mildew, oxidative degradation, discoloration and loss of flavor of foods, can provide insect proofness and mildew proofness of clothes, can prevent rusting of metal products, can prevent denaturation of chemical products, and can prevent lowering of efficacy and denaturation of medicines.

The deoxidant composition of the invention can be used, for example, for foods, drinks, medicines, pet foods, animal feed, cosmetics, perfumes, metal products, clothes, bedclothes, fibrous products, furs, art works, pictures, antiques, musical instruments, tires, rubbers, machines, electronic parts, plastics, photographic films, medical instruments, pigments and dyes. They can be used for the foods of kinds including, for example, western confectionaries such as cookies, baum kuchens, doughnuts and chocolates; munches such as potato chips; Japanese confectionaries such as rice crackers, buns with bean-jam and castellas; sea food processing products such as fish pastes, fish sausages, dried bonits, dried fishes and dried small sardines; meat products such as salamis, sausages, hams, bacons and beef jerkies; dairy products such as cheese; candies; Japanese tea; black tea; oolong tea; coffee; spice; dried laver; soybean paste; fish and vegetable flake; sesame; nuts; bread; noodles; rice; wheat; rice cake; beans and serials.

## Claims

1. A deoxidant composition comprising:
a polyphenol derivative obtainable by subjecting a polyphenol to a reaction using an alkaline solvent under the coexistence of an oxygen molecule at a pH during reaction of 6.5 or more; and
one member selected from water, a water-donating compound, and a moisture absorbent.

2. The deoxidant composition according to claim 1, wherein the polyphenol is a polyphenol having an o-diphenol structure.

3. The deoxidant composition according to claim 1, wherein the polyphenol is a polyphenol having a p-diphenol structure.

4. The deoxidant composition according to any one of claims 1 to 3, wherein the polyphenol derivative is obtainable by further adding and reacting a divalent or multivalent metal ion.

5. The deoxidant composition according to any one of claims 1 to 4, wherein the polyphenol derivative is a polyphenol derivative obtainable by subjecting a plant extract which contains a polyphenol and does not substantially contains an amino acid to a reaction using an alkaline solvent under the coexistent of an oxygen molecule at a pH value during reaction of 6.5 or more.

6. The deoxidant composition according to any one of claims 1 to 5, wherein the polyphenol derivative is obtainable by further adding and reacting an amino acid.

7. A deoxidant composition comprising:
a polyphenol derivative obtainable by subjecting a plant extract and/or plant body containing a polyphenol and an amino acid to a reaction using an alkaline solvent under the coexistent of an oxygen molecule at a pH value during reaction of 6.5 or more; and
one member selected from water, a water-donating compound, and a moisture absorbent.

8. The deoxidant composition according to any one of claims 1 to 7, wherein the water-donating compound is a compound containing crystallization water.

9. The deoxidant composition according to any one of claims 1 to 8, wherein the water content in said composition is from 0.025 to 0.5 weight times with respect to the weight of the polyphenol derivative.

10. Use of a polyphenol derivative obtainable by subjecting a polyphenol to a reaction using an alkaline solvent under the coexistence of an oxygen molecule at a pH during reaction of 6.5 or more to a deoxidant.
